(19) Europäisches Patentamt
European Patent Office
Office européen des brevets

(11) Numéro de publication: **0 194 902 B1**

(12) **FASCICULE DE BREVET EUROPEEN**

(45) Date de publication de fascicule du brevet:
07.08.91

(51) Int. Cl.⁵: **H04L 1/02**, H02J 13/00,
H04B 3/54

(21) Numéro de dépôt: 86400089.8

(22) Date de dépôt: **17.01.86**

(54) **Procédé et système de transmission en bande étalée, notamment pour la transmission d'information sur un réseau de distribution d'énergie électrique.**

(30) Priorité: **14.02.85 FR 8502135**

(43) Date de publication de la demande:
**17.09.86 Bulletin 86/38**

(45) Mention de la délivrance du brevet:
**07.08.91 Bulletin 91/32**

(84) Etats contractants désignés:
**AT BE CH DE FR GB IT LI NL SE**

(56) Documents cités:
EP-A- 0 041 193
FR-A- 2 251 138
US-A- 3 909 527

IEEE TRANSACTIONS ON AEROSPACE AND NAVIGATIONAL ELECTRONICS, vol. ANE-11, no. 4, décembre 1964, pages 285-291, IEEE, New York, US; K.W. OTTEN: "Digital HF communication system for long-distance air-to-ground communication"

(73) Titulaire: **SCHLUMBERGER INDUSTRIES**
**50, avenue Jean Jaurès**
**F-92120 Montrouge(FR)**

(72) Inventeur: **Galula, William**
**7, rue Barthélémy**
**F-92120 Montrouge(FR)**
Inventeur: **Ridgers, Timothy**
**1010 Treeridge Parkwag**
**Alpharetta Georgia 30201(US)**

(74) Mandataire: **Bentz, Jean-Paul**
**SCHLUMBERGER INDUSTRIES Propriété Intellectuelle Groupe Electricité B.P. 620-02**
**F-92542 Montrouge Cédex(FR)**

## Description

La présente invention concerne un procédé et un système de transmission en bande étalée notamment pour la transmission d'informations sur un réseau de distribution d'énergie électrique, en particulier un réseau basse tension.

Un domaine d'application particulier, mais non exclusif, de l'invention est celui de la transmission automatique à un point central d'indications de compteurs d'électricité ou d'autre fluide affectés à plusieurs appartements ou habitations respectifs, de façon à permettre un relevé des compteurs à distance.

En plus des avantages évidents que procure la centralisation automatique d'indications de compteurs, l'utilisation du réseau comme support de transmission permet de se passer de liaisons spéciales entre le point central et les compteurs.

Toutefois, en raison de l'aspect aléatoire et tourmenté de sa caractéristique de transmission et de la présence de bruits, le réseau est un support difficile à utiliser pour transmettre des informations de façon fiable.

En effet, l'examen de la caractéristique de transmission d'un réseau de distribution fait apparaître d'importantes variations de l'atténuation en fonction de la fréquence avec de véritables trous de transmission pour certaines fréquences, ces variations étant différentes d'un réseau à un autre.

Les bruits sont de plusieurs types. Certains sont des signaux à fréquence fixe provenant de l'ouverture de charges inductives ; ce sont des bruits impulsifs dont l'amplitude peut être relativement élevée. Une deuxième source de bruit est constituée par les harmoniques de la fréquence du réseau, mais ils sont assez fortement atténués à partir de quelques kHz. Il existe encore un bruit de fond gaussien dont l'amplitude, à titre d'exemple, peut être de l'ordre de lmV dans une bande de fréquence de 50 Hz centrée sur 100 kHz. Peuvent encore s'ajouter des perturbations telles que celles engendrées par les téléviseurs et les interphones.

Pour améliorer la sécurité de la transmission dans de telles conditions, il a été proposé de réaliser une transmission en bande étalée. Un tel procédé de transmission est décrit dans la demande de brevet français No 2 391 585 (FR-A-2 391 585).

D'une façon plus générale, il est connu d'utiliser des procédés de codage et décodage d'informations particuliers pour réaliser une transmission en bande étalée en vue d'augmenter la sécurité de transmission et l'immunité au décryptage (voir, à titre d'exemple, IEEE TRANSACTIONS ON AEROSPACE AND NAVIGATIONAL ELECTRONICS, Vol. ANE-11, No. 4, dec. 1964, pages 285-291, IEEE, New York, US; K.W. OTTEN: "Digital HF communication system for long-distance air to ground communication").

L'invention concerne en premier un tel procédé de transmission en bande étalée pour transmettre des informations se présentant sous forme de mots constitués d'éléments d'information pouvant prendre l'une parmi plusieurs valeurs, et plus particulièrement un procédé du type selon lequel :

- à l'émission, chaque élément d'information à transmettre est codé par une succession de plusieurs fréquences de codage différentes prédéterminées, une combinaison particulière de fréquences de codage étant associée à chaque valeur d'élément d'information, et un signal comportant ladite succession de fréquences est émis, et

- en réception, le signal reçu est appliqué à des démodulateurs pour être corrélé avec des signaux qui sont engendrés localement et qui reproduisent, avec un décalage de fréquence sensiblement fixe, lesdites combinaisons particulières de fréquences, et la valeur de l'élément d'information est déterminée en fonction du résultat de la corrélation.

L'invention a pour but de fournir un tel procédé avec lequel la fiabilité de la transmission et la détection en réception sont encore améliorées.

Ce but est atteint grâce au procédé défini par la revendication 1.

La répartition des fréquences de codage dans plusieurs bande espacées les unes des autres réduit la sensibilité de la transmission aux variations de l'atténuation de la voie de transmission en fonction de la fréquence, d'où une meilleure fiabilité de la transmission.

Par ailleurs, chaque démodulateur étant affecté à une bande de fréquence particulière, il peut lui être associé à l'entrée un filtre passe-bande correspondant. Ainsi, chaque démodulateur ne traite que les composantes du signal reçu qui se trouvent dans une bande limitée par rapport à celle étendue utilisée pour la transmission, ce qui permet une détection améliorée.

La qualité de la détection vient non seulement de l'affectation de chaque démodulateur à une bande de fréquence particulière, mais également du fait que les fréquences de même rang des combinaisons ou successions de fréquences de codage se trouvent dans des bandes différentes. Ainsi, pour un rang donné, la détection a lieu dans un démodulateur particulier fonction de la valeur de l'élément d'information. Cette valeur est retrouvée en combinant les informations obtenues en sortie des démodulateurs pour les différents rangs.

Ainsi, dans le cas habituel où l'information à transmettre est un mot numérique formé d'éléments d'information binaires (bits), un bit de niveau bas (0) est codé par une succession prédéterminée de N fréquences de codage f1 à fN et un bit de niveau haut (1) est codé par une autre succession prédéterminée de ces N fréquences. Les fréquences de codage sont différentes les unes des autres et sont réparties dans deux bandes espacées l'une de l'autre. Le codage est réalisée de sorte que la $n^{\text{ème}}$ fréquence de la combinaison codant un bit 0 et la $n^{\text{ème}}$ fréquence de la combinaison codant un bit 1 ne se trouvent pas dans la même bande, et ce quelle que soit la valeur du nombre entier n entre 1 et N compris. En réception, deux démodulateurs sont utilisés qui sont affectés respectivement aux deux bandes dans lesquelles sont réparties les fréquences de codage. Les signaux engendrés localement reproduisent, avec un décalage de fréquence sensiblement fixe, les deux combinaisons de fréquences de codage. Les composantes de ces signaux qui se trouvent dans l'une des bandes sont appliquées à l'un des démodulateurs tandis que les autres composantes qui se trouvent dans l'autre bande sont appliquées à l'autre démodulateur. Contrairement aux décodeurs connus utilisés dans des systèmes de transmission en bande étalée par saut de fréquence, l'on ne trouve donc pas un démodulateur affecté au bit 0 et un démodulateur affecté au bit 1.

Comme déjà indiqué, le procédé selon l'invention est plus particulièrement destiné à la transmission d'informations sur un réseau de distribution d'énergie électrique, entre au moins un émetteur et un récepteur. Dans ce cas, un signal de déclenchement est émis sur le réseau et le signal d'information est émis par l'émetteur sur le réseau en réponse à la détection du signal de déclenchement.

Avantageusement, dans le cas où la transmission est effectuée entre plusieurs émetteurs et un récepteur, le signal de déclenchement est détecté par chaque émetteur et le signal d'information est émis par chaque émetteur avec une temporisation prédéterminée, propre à cet émetteur, suivant la détection du signal de déclenchement.

Selon un autre de ses aspects, l'invention a aussi pour but de fournir un système de transmission permettant la mise en oeuvre du procédé défini plus haut.

Ce but est atteint au moyen du système de transmission défini par la revendication indépendante 3.

Pour l'application à la transmission d'informations sur réseau entre au moins un émetteur et un récepteur, le récepteur peut comporter un circuit d'émission de signal de déclenchement sur le réseau et le ou chaque émetteur comprend un circuit de détection de signal de déclenchement pour commander l'émission du signal d'information en réponse à la détection du signal de déclenchement.

Il peut également être envisagé le cas dans lequel l'ordre de déclenchement du système est donné par un autre dispositif d'émission, par exemple un dispositif d'émission se trouvant sur le réseau moyenne tension et commandant plusieurs systèmes branchés sur la basse tension. Un tel fonctionnement peut être obtenu grâce à l'utilisation de techniques existantes, comme la télécommande centralisée. Dans ce cas, le récepteur du système de transmission sur la basse tension est muni de moyens de réception ou détection du signal de déclenchement permettant de déterminer l'instant de déclenchment du système.

Afin de permettre la transmission entre plusieurs émetteurs et un même récepteur, chaque émetteur comprend un circuit de temporisation relié au circuit de détection de signal de déclenchement pour commander l'émission du signal d'information avec un retard prédéterminé, propre à cet émetteur, après la détection du signal de déclenchement.

D'autres particularités et avantages du procédé et du système conformes à l'invention ressortiront à la lecture de la description faite ci-après, à titre indicatif mais non limitatif, en référence aux dessins annexés sur lesquels :

- la figure 1 est un schéma d'ensemble d'un mode de réalisation d'un système de transmission conforme à l'invention,
- la figure 2 illustre un exemple de combinaisons de fréquences de codage d'un bit 0 et d'un bit 1 au cours de deux périodes successives du signal de ligne,
- la figure 3 est un schéma plus détaillé du circuit de synchronisation d'un émetteur du système de la figure 1,
- la figure 4 est un schéma plus détaillé du circuit de synthèse de fréquences et de commande de séquence faisant partie d'un émetteur du système de la figure 1,
- la figure 5 illustre de façon plus détaillée un mode de réalisation du codeur de sorties du circuit de la figure 4 et les formes d'ondes en différents points de ce codeur de sorties,
- la figure 6 est un schéma plus détaillé du circuit d'injection faisant partie d'un émetteur du système de la figure 1,
- la figure 7 est un schéma plus détaillé du circuit de traitement de signal d'entrée faisant partie du récepteur du système de la figure 1,
- la figure 8 est un schéma plus détaillé d'un circuit de synthèse de fréquences et de commande de séquence faisant partie du récepteur du système de la figure 1,
- la figure 9 illustre de façon plus détaillée un mode de réalisation du codeur de sorties du circuit de la figure 8 et les formes d'ondes en différents points de ce codeur de sorties,

- la figure 10 est un schéma plus détaillé d'un démodulateur du récepteur du système de la figure 1,
- la figure 11 est un schéma plus détaillé du circuit logique de décodage connecté en sortie des démodulateurs du récepteur du système de la figure 1, et
- la figure 12 est un schéma plus détaillé d'un circuit pouvant être utilisé pour déclencher le système à partir du récepteur du système de la figure 1.

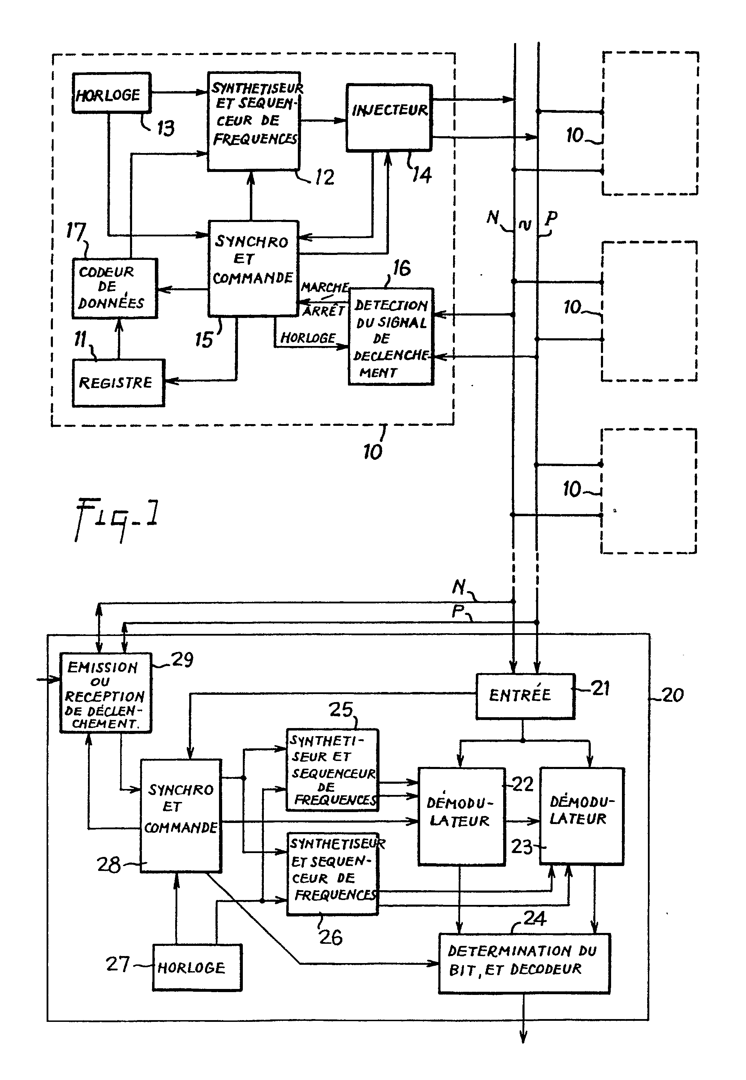

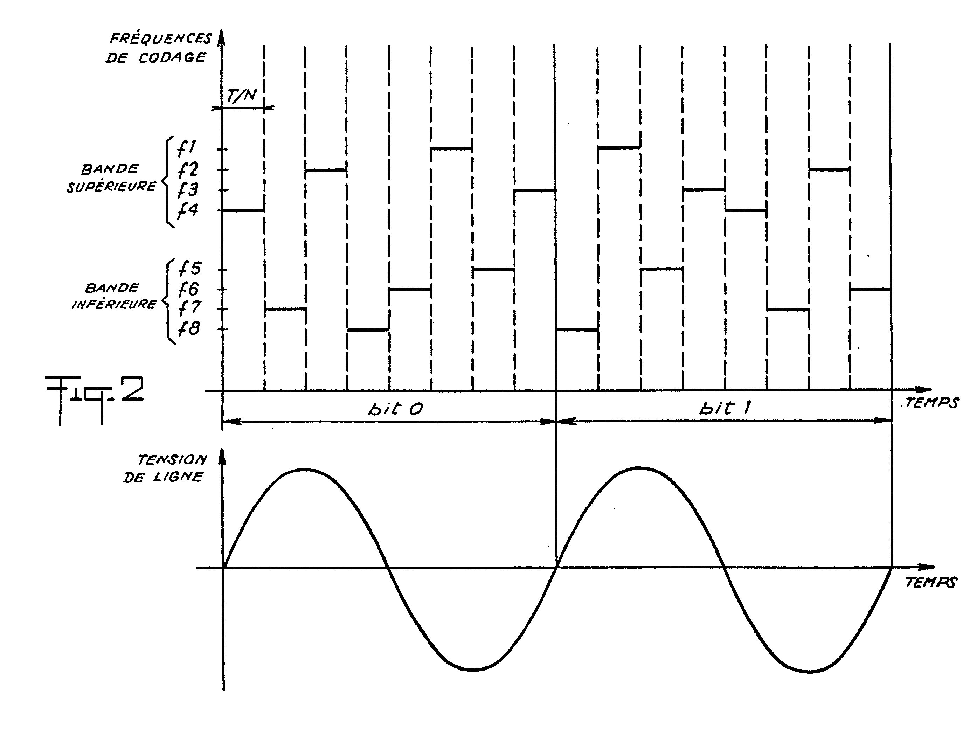

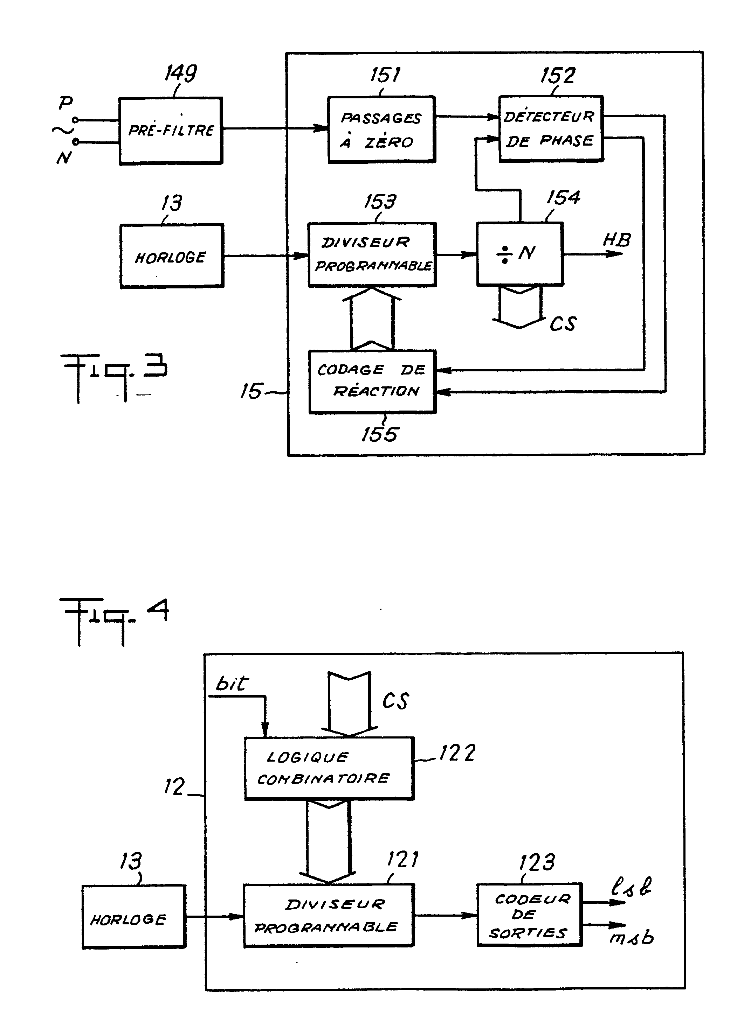

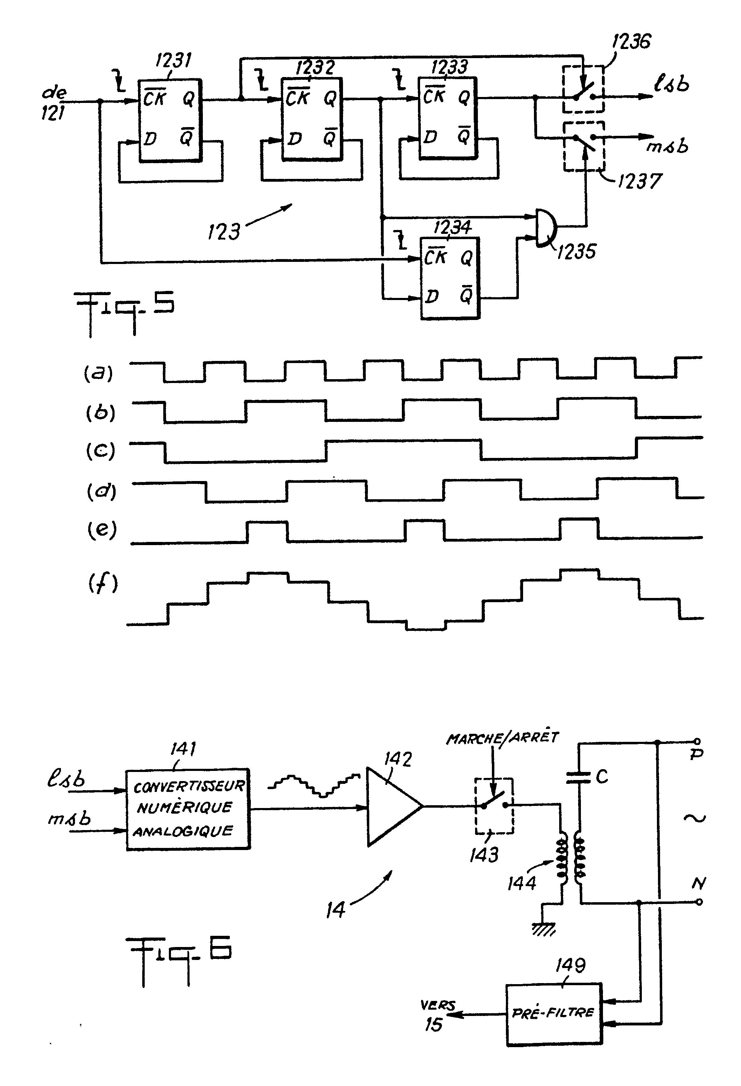

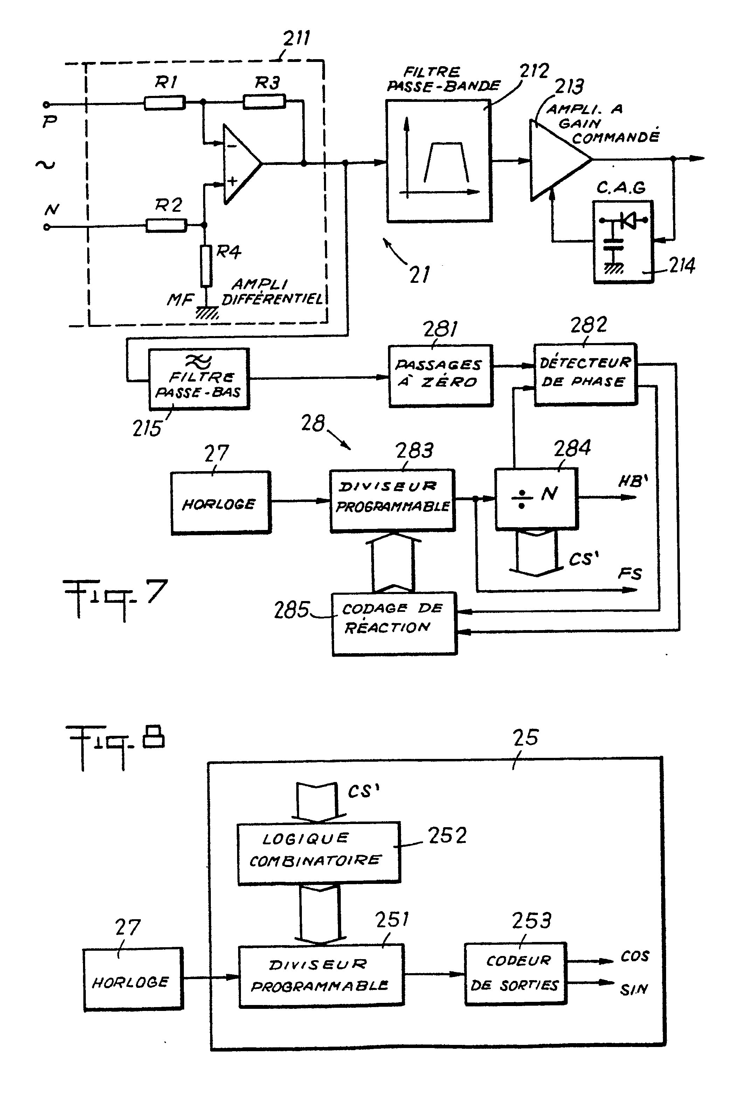

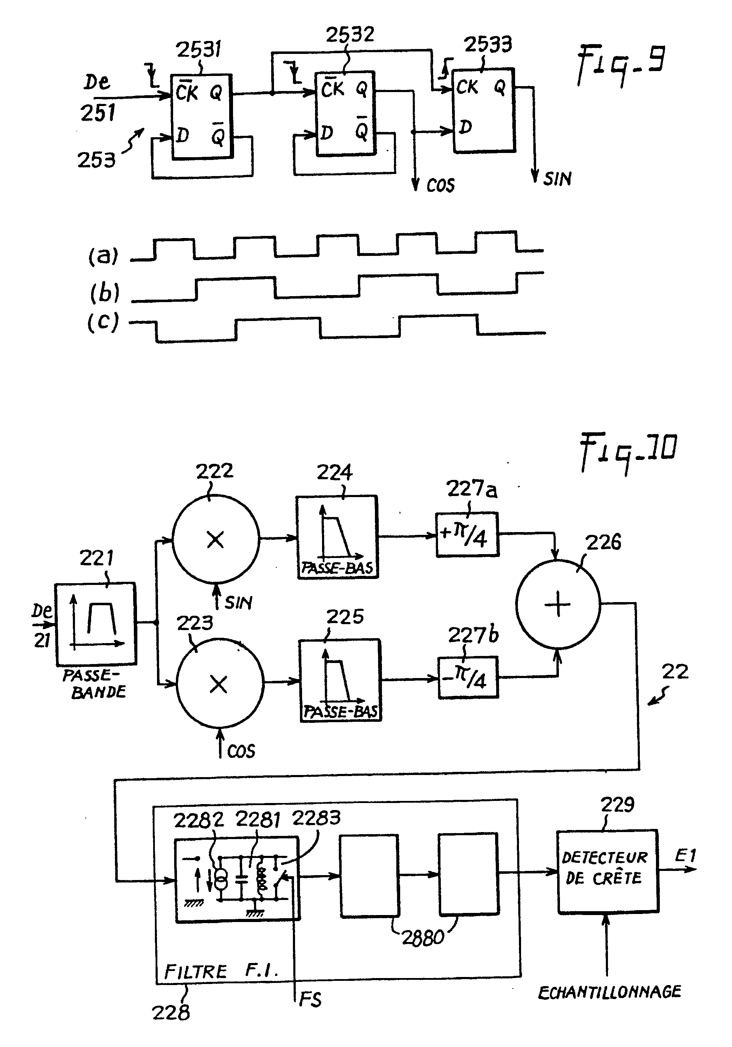

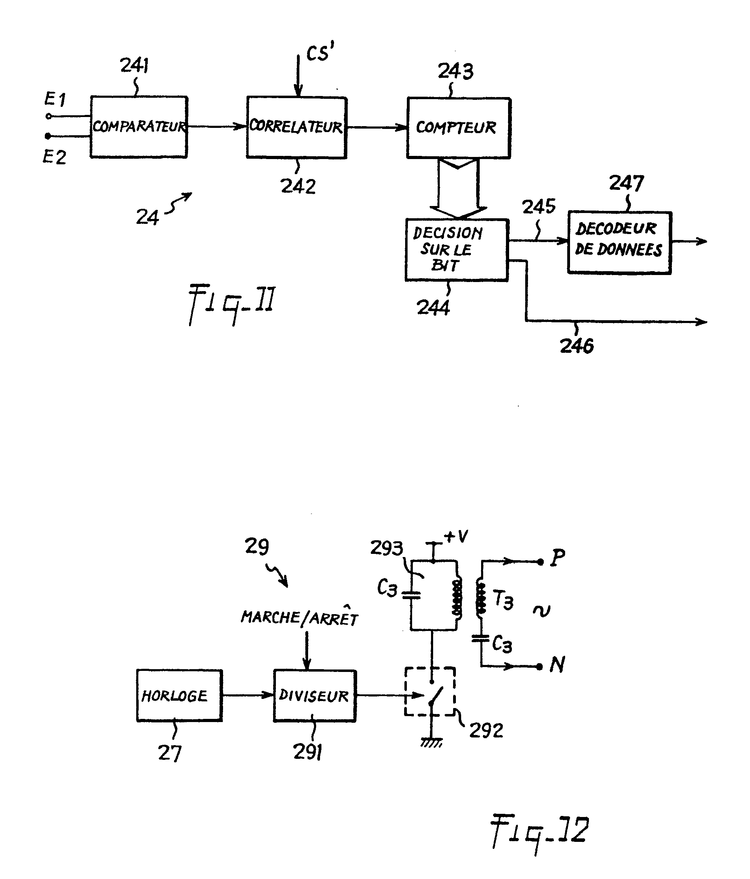

Le système de transmission schématisé par la figure 1 est destiné à la transmission d'informations sur un réseau basse tension entre plusieurs émetteurs semblables 10 et un récepteur unique 20 chacun branché entre un conducteur de phase P et un conducteur de neutre N. Chaque émetteur 10 est par exemple associé à un compteur, tel qu'un compteur d'électricité, eau ou gaz, affecté à un appartement ou une habitation. Le récepteur 20 est par exemple disposé au poste de transformation basse tension desservant les appartements ou habitations auxquels sont associés les émetteurs.

Chaque émetteur 10 comprend un registre 11 où est recopiée l'information à transmettre, par exemple, de façon non limitative, l'indication d'un compteur (non représenté). Cette information est sous forme d'un mot numérique de plusieurs bits.

Un circuit 12 de synthèse de fréquences et de commande de séquence reçoit chaque bit à transmettre et convertit chaque bit sous forme d'un signal constitué d'une succession de fréquences de codage prédéterminées. Une première combinaison de fréquences préprogrammée est utilisée pour coder un bit de niveau bas (0) et une seconde combinaison de fréquences préprogrammée est utilisée pour coder un bit de niveau haut (1). Ainsi, pour chaque bit, le signal produit par le circuit 12 est sous forme d'un train d'impulsions dont la fréquence varie par saut de façon périodique pendant la durée de transmission de ce bit, ces impulsions étant engendrées par division de la fréquence d'une horloge 13. Un exemple des valeurs successives de fréquences utilisées pour coder les bits est illustré sur la figure 2. Dans cet exemple, un bit 0 et un bit 1 sont transmis successivement pendant deux périodes consécutives T du signal de ligne sur le conducteur P. La variation d'amplitude de ce signal est également représentée sur la figure 2; l'on voit que le début du codage de chaque bit est synchronisé sur le passage à zéro du signal du réseau.

Les impulsions produites par le circuit 12 sont utilisées par un injecteur 14 pour injecter des signaux sur le réseau basse tension sur deux fils reliés respectivement à un conducteur de phase P et à un conducteur de neutre N.

Un circuit 17 peut être interposé entre le registre 11 et la partie de génération de fréquences 12 pour ajouter des bits de redondance de codage. Ce bloc permet la détection de bits erronés à la réception en utilisant un décodeur complémentaire. Toute méthode de codage connue en soi peut être utilisée dans le circuit 17.

La lecture des bits dans le registre 11, le codage des données par le circuit 17 et le fonctionnement du circuit 12 sont commandés par des signaux de synchronisation produits par un circuit de synchronisation 15 à partir, d'une part, d'une tension dérivée du réseau et, d'autre part, du signal de l'horloge 13.

Un circuit 16 a des entrées reliées au réseau pour détecter un signal de déclenchement envoyé sur le réseau soit d'un point central en moyenne tension dans le cas d'une utilisation d'un système de télécommande centralisée, soit du récepteur 20. En réponse à la détection du signal de déclenchement, le circuit 16 commande le démarrage de l'émission du signal d'information codé.

Plusieurs émetteurs étant raccordés au réseau, le circuit de détection 16 d'un émetteur comprend un circuit à retard qui définit une temporisation propre à cet émetteur de sorte que les émissions en provenance des différents émetteurs se succèdent dans un ordre pré-établi à la suite de l'émission du signal de déclenchement.

Le récepteur 20 comprend un circuit d'entrée 21 ayant des entrées reliées aux conducteurs N et P. Après filtrage et amplification à travers ce circuit 21, le signal d'information reçu est appliqué en parallèle à deux démodulateurs 22, 23 dont les sorties sont reliées à un circuit de détermination de bit 24.

Chaque démodulateur 22, 23 reçoit deux signaux déphasés l'un de l'autre de 90° et produits par un circuit de synthèse de fréquences et de commande de séquence, respectivement 25, 26.

Conformément à une caractéristique de l'invention, les fréquences de codage utilisées à l'émission sont, dans cet exemple, réparties pour parties égales dans deux bandes de fréquences espacées l'une de l'autre et, dans les combinaisons de N fréquences utilisées pour coder les bits 0 et 1, les $n^{èmes}$ fréquences ne sont pas choisies dans la même bande, quelle que soit la valeur de n entre 1 et N compris. Cette caractéristique ressort de l'exemple illustré par la figure 2, exemple selon lequel huit fréquences de codage f1 à f8 sont utilisées réparties également dans une bande supérieure et une bande inférieure. Selon une autre caractéristique de l'invention, les démodulateurs 22 et 23 sont affectés respectivement à l'une et à l'autre bande de fréquences. Ainsi, si le démodulateur 22 est affecté à la bande supérieure, il reçoit du circuit 25 deux signaux mutuellement déphasés de 90° qui reproduisent, avec un décalage de fréquence fixe, les N/2 fréquences de codage de la bande supérieure, dans l'ordre de leur utilisation pour le codage des bits 0 et 1. Le démodulateur 23 reçoit alors du circuit 26 deux signaux mutuellement déphasés de 90° qui reproduisent, avec un décalage de fréquence fixe, les N/2 fréquences de codage de la bande inférieure, dans l'ordre de leur utilisation pour le codage des bits 0 et 1.

De préférence, les séquences de fréquences de codage des bits 0 et 1 sont choisies en sorte que l'intervalle de temps T/N pendant lequel est envoyée une fréquence quelconque, qu'elle soit dans la bande supérieure ou dans la bande inférieure, pour coder un bit 1 ne succède pas ou ne précède pas l'intervalle de temps pendant lequel la même fréquence est envoyée pour coder un bit 0. Il en est ainsi dans l'exemple illustré par la figure 2. De la sorte, quand il existe des imprécisions temporelles entre la synchronisation du récepteur et celle d'un émetteur, l'intercorrélation entre le code d'un bit 1 et celui d'un bit 0 est minimisée.

Comme cela sera expliqué plus en détail ci-après, l'utilisation combinée du décalage fixe de fréquence et de deux signaux engendrés localement avec un déphasage mutuel de 90° permet une détection de fréquence intermédiaire avec bande latérale unique.

Les signaux produits par les circuits 25 et 26 sont sous forme de train d'ondes dont la fréquence varie par saut avec la même période de saut que celle utilisé à l'émission, et sont engendrées à partir de la division de la fréquence d'une horloge 27.

Le fonctionnement des circuits 25, 26 est commandé par des signaux de synchronisation produits par un circuit de synchronisation 28 à partir, d'une part, d'un signal dérivé de la tension de réseau et, d'autre part, du signal de l'horloge 27.

Un circuit de déclenchement 29 est relié aux conducteurs N et P pour, soit émettre lui-même le signal de déclenchement, soit recevoir l'ordre de déclenchement du système, émis d'un point central (par exemple en moyenne tension si on fait appel à la télécommande centralisée).

Les différents circuits constitutifs d'un émetteur 10 et du récepteur 20 du système de transmission de la figure 1 seront maintenant décrits plus en détail en référence aux figures 3 à 12.

La figure 3 illustre le circuit 15 de synchronisation d'un émetteur. La corrélation du signal à la réception nécessite non seulement des informations fréquencielles, mais aussi des informations temporelles. Tous les émetteurs 10 doivent donc être synchronisés avec le récepteur 20. Cette synchronisation est basée sur la détection du passage à zéro de la tension du réseau. A cet effet, le circuit 15 a deux entrées reliées respectivement aux conducteurs N et P pas l'intermédiaire d'un circuit de pré-filtrage 149 qui, dans l'exemple illustré, est logé dans l'injecteur 14. Le pré-filtre 149 est un filtre passe-bas destiné à atténuer les harmoniques du réseau (50 Hz ou 60 Hz) et les signaux d'émission-réception.

Le signal de sortie du pré-filtre 149 est mis en forme au moyen d'un circuit 151 qui détecte les passages à zéro et produit un signal logique carré à la fréquence du réseau. Compte-tenu des problèmes liés à une transition lente, il est préférable que le circuit de mise en forme 151 présente une hystérésis (par exemple bascule de Schmitt) pour empêcher les oscillations provoquées par un bruit autour du zéro.

La sortie du circuit de mise en forme 151 attaque un détecteur de phase 152 dont une autre entrée est reliée à la sortie d'un diviseur de fréquence par N, 154. Le détecteur de phase 151 a deux sorties reliées à un circuit 155 de codage de réaction. Un signal est produit sur l'une ou l'autre des sorties du détecteur de phase 152 selon le sens du déphasage entre les signaux reçus par ce détecteur et avec une amplitude fonction de ce déphasage. Le circuit 155 convertit le signal reçu du détecteur de phase 152 en un code numérique de réaction qui détermine le coefficient de division d'un diviseur de fréquence programmable 153 branché entre l'horloge 13 et le diviseur de fréquence 154. Les circuits 152, 153, 154 et 155 constituent une boucle à verrouillage de phase (ou "PLL" en notation anglaise) dont l'horloge est constituée pas le circuit 13 de l'émetteur. La structure et le fonctionnement d'une telle boucle à verrouillage de phase sont bien connus en soi et ne nécessitent donc pas une description plus détaillée.

Le coefficient de division N du diviseur 154 est fixe et égal au nombre de fréquences utilisées pour former la combinaison de codage de chaque bit 0 ou 1 pas période du réseau. Le diviseur 154, sous forme d'un compteur pas N, fournit un coefficient numérique de saut CS qui, au cours de chaque période du réseau, prend successivement les valeurs 0 à N-1 pour revenir à 0 au début de la période suivante. Le coefficient de saut CS est utilisé dans le synthétiseur de fréquences 12 pour identifier les intervalles de temps à chaque saut de fréquence. De plus, le diviseur 154 fournit un signal HB à la fréquence du bit (horloge du bit) utilisable dans d'autres parties du système pour commander des évènements devant être synchronisés sur le rythme du bit.

L'utilisation de la boucle de verrouillage de phase décrite plus haut permet d'asservir efficacement la fréquence des signaux de synchronisation à celle du réseau, malgré les variations de cette dernière autour de sa valeur nominale. Pour une bonne précision, il est préférable d'utiliser une boucle de verrouillage de phase du deuxième ordre.

La figure 4 illustre le circuit 12 de synthèse de fréquences et de commande de séquence. Chaque bit de l'information à transmettre est codé par une succession de N fréquences de codage prédéterminées, par exemple 8 fréquences. Les fréquences de codage sont engendrées par division de la fréquence de l'horloge 13 au moyen d'un diviseur pogrammable 121 branché entre l'horloge 13 et un codeur de sorties 123.

Le coefficient de division du diviseur programmable 121 est fourni par un circuit de logique combinatoire 122 qui reçoit, d'une part, le bit à coder et, d'autre part, le coefficient de saut CS fourni par le circuit de synchronisation 15 décrit plus haut. Le bit à coder est lu au rythme du bit dans le registre 11 ou dans le codeur de données 17 lorsque ce dernier est présent.

Le circuit de logique combinatoire 122 transforme le coefficient de saut identifiant un intervalle de temps à l'intérieur d'une période du réseau en un coefficient de division prédéterminé fonction du bit à coder. L'on obtient ainsi en sortie du diviseur 121 un train d'impulsions dont la fréquence varie sur la durée d'une période du réseau en synchronisme avec les sauts définis par le circuit de synchronisation. Dans l'exemple illustré, le mot numérique fourni par le circut 122 est une combinaison logique prédéterminée du mot numérique représentant le coefficient de saut avec le bit à transmettre. En variante, le coefficient de saut et le bit à transmettre peuvent être utilisés comme éléments d'adresse pour lire le coefficient de division à appliquer au diviseur 121 dans une mémoire de type ROM.

Un mode de réalisation du codeur de sorties 123 utilisable en liaison avec l'injecteur 14 décrit plus loin est illustré par la figure 5.

Le codeur 123 comporte trois bascules 1231, 1232, 1233 câblées chacune en diviseur par deux et branchées en cascade, chaque bascule étant actionnée sur le front descendant du signal reçu. La fréquence du signal de sortie du diviseur 121 est ainsi divisée par deux par la bascule 1231, encore par deux par la bascule 1232 et une dernière fois par deux par la bascule 1233. Les lignes (a), (b) et (c) représentent les signaux sur les sorties Q des bascules 1231, 1232, 1233. La sortie Q de la bascule 1232 est reliée en outre à l'entrée de données D d'une quatrième bascule 1234 et à une entrée d'une porte ET 1235 à deux entrées. La bascule 1234 a son entrée d'horloge CK reliée à la sortie du diviseur 121 et sa sortie inversée $\overline{Q}$ reliée à la deuxième entrée de la porte 1235, formant ainsi avec cette dernière un circuit de type monostable. Les lignes (d) et (e) représentent les signaux sur la sortie Q de la bascule 1234 et sur la sortie de la porte 1235. La sortie $\overline{Q}$ de la bascule 1233 est reliée à une première sortie lsb du codeur 123 par l'intermédiaire d'un commutateur 1236 commandé par la sortie Q de la bascule 1231, et cette même sortie Q de la bascule 1233 est reliée à une deuxième sortie msb du codeur 123 par l'intermédiaire d'un commutateur 1237 commandé par la sortie de la porte 1235. Comme indiqué plus loin, les signaux sur les sorties lsb et msb sont appliqués à un convertisseur numérique-analogique dans l'injecteur 14 pour donner un signal en marches d'escalier constituant une approximation d'une sinusoide (ligne (f) de la figure 5) dont la fréquence fondamentale est le huitième de la fréquence de sortie du diviseur 121.

Dans l'exemple décrit, le nombre N de fréquences différentes utilisées pour coder chaque bit est égal à huit. Bien entendu, un nombre autre que huit pourrait être choisi. A titre indicatif, en partant d'une horloge maître à 4,194 MHz (environ $2^{22}$), et avec des coefficients de division du diviseur 121 égaux respectivement à 6, 7, 8, 9, 10, 11, 12, 13, on obtient en sortie du circuit 12, et compte-tenu de la division par huit introduite par le codeur 123, des fréquences f1 à f8 égales respectivement à 87,4 kHz, 74,9 kHz, 65,5 kHz, 58,2 kHz, 52,4 kHz, 47,6 kHz, 43,7 kHz et 40,3 kHz.

Les signaux trois états en sortie lsb et msb du codeur 123 sont donc appliqués à l'entrée de l'injecteur 14 (figure 6) et sont combinés par un jeu de résistances dans un convertisseur numérique-analogique 141 pour former le signal en marches d'escalier d'allure sinusoidale représenté à la ligne (f) de la figure 5.

Le signal de sortie du convertisseur 141 est appliqué à l'entrée d'un amplificateur linéaire 142 muni d'un filtre passe-bas dont la fréquence de coupure se situe au-delà de la fréquence de codage la plus élevée et dont la fonction est de lisser les discontinuités les plus abruptes en sortie du convertisseur 121. L'amplificateur 122 est conçu pour permettre de fournir une puissance moyenne de l'ordre de 50 à 250 mW pour exciter le réseau.

Un interrupteur 143 est branché en sortie de l'amplificateur 142 et est commandé par un signal marche/arrêt produit par le circuit de détection 16 pour fermer l'interrupteur 143 en réponse à la réception d'un ordre de déclenchement. En mode non-émission, l'interrupteur 143 présente une forte impédance au réseau électrique dans la bande de fréquence utilisée ; de la sorte, les signaux émis d'un injecteur d'un autre émetteur et transmis sur le même réseau basse tension ne sont pas atténués. Par contre, en mode émission, l'interrupteur 143 est fermé et la faible impédance de sortie de l'amplificateur 142 assure l'injection d'une tension convenable (par exemple 1 V efficace) même lorsque le réseau présente une faible impédance caractéristique. Un transformateur d'impédance 144 est interposé entre l'interrupteur 143 et le réseau électrique. Le primaire est branché entre la sortie de l'interrupteur et la masse de l'émetteur. Le secondaire comporte moins de spires que le primaire, est isolé de celui-ci, et est branché en série avec un condensateur C entre le conducteur de neutre N et le conducteur de phase P. Le condensateur C permet d'atténuer fortement le signal de puissance à la fréquence du réseau et l'empêche d'attaquer l'amplificateur 142 à travers le transformateur 144. De plus, le condensateur C présente une basse impédance à haute fréquence pour permettre un couplage sans trop de pertes de la sortie de l'émetteur au réseau.

L'émetteur 10 comprend encore des circuits d'alimentation (non représentés) destinés à fournir les tensions d'alimentation nécessaires au fonctionnement des circuits de l'émetteur. Les tensions d'alimentation sont obtenues par redressement de tensions dérivées du réseau.

On se réfère maintenant à la figure 7 où sont illustrés les circuits d'entrée et de synchronisation du récepteur 20.

Le circuit d'entrée 21 comprend un amplificateur différentiel 211 dont une première voie comprend une résistance R1 branchée entre le conducteur P et l'entrée inverseuse d'un amplificateur opérationnel A1, et dont une deuxième voie comprend une résistance R2 branchée en série entre le conducteur N et l'entrée non-inverseuse de l'amplificateur A1. La sortie de l'amplificateur A1 est reliée à son entrée inverseuse par une résistance R3 tandis qu'une résistance R4 relie l'entrée non-inverseuse à une masse flottante MF.

La sortie de l'étage différentiel 211 attaque un filtre passe-bande 212 qui atténue les basses fréquences du réseau (notamment la fréquence du réseau et ses harmoniques) et limite la bande supérieure au-delà de la fréquence la plus haute utilisée pour le codage (par exemple environ 100 kHz:).

Le signal sortant du filtre 212 est: traité par un amplificateur à gain commandé 213, le circuit de réaction branché entre la sortie de l'amplificateur et son entrée de commande de gain utilisant un détecteur de crête 214. Ainsi, quand le signal superposé à la tension du réseau a une amplitude qui varie en raison des variations d'atténuation dans la bande de fréquence utilisée, ou de la présence ou non de parasites, on évite la saturation de l'amplificateur avec les distorsions et mélanges involontaires de fréquences qui en résulteraient. Le contôle automatique de gain permet également de ne pas fournir en sortie de l'amplificateur des signaux dont l'amplitude descend en-dessous du niveau minimum de capture.

La figure 7 montre également le circuit de synchronisation 28. Il est semblable à celui 15 de l'émetteur et utilise, comme lui, la tension du réseau.

seau.

Le signal de sortie de l'étage différentiel 211 est filtré au moyen d'un filtre passe-bas 215 laissant passer la fréquence du réseau et est mis en forme au moyen d'un circuit 281 qui détecte les passages à zéro et produit un signal logique carré à la fréquence du réseau. La sortie du circuit de mise en forme 281 attaque une bouche à verrouillage de phase formée par un détecteur de phase 282, un circuit 285 de codage de réaction, un diviseur de fréquence programmable 283 et un diviseur de fréquence par N, 284. Cette boucle de verrouillage de phase fonctionne de la même manière que celle formée par les composants 152, 153, 154 et 155 du circuit 15 décrit plus haut, et utilise l'horloge 27 du récepteur. Cette horloge est de préférence à une fréquence plus élevée que celle de l'horloge 13 de l'émetteur, cela pour augmenter la précision sur les fréquences engendrées par division de la fréquence d'horloge afin de démoduler les informations reçues avec une fréquence intermédiaire sensiblement fixe. Aussi, le diviseur programmable 283 comprend un plus grand nombre d'étages de division que le diviseur 153 du circuit 15 de l'émetteur. Pour le reste, les boucles à verrouillage de phase de l'émetteur et du récepteur ont les mêmes caractéristiques, définies par le circuit de codage de réaction, de sorte que l'émetteur et le récepteur sont synchronisés indépendamment des variations de la fréquence du réseau.

Le circuit de synchronisation 28 délivre des coefficients numériques de saut CS' et un signal HB' à la fréquence du bit de la même manière que le circuit 15 de l'émetteur. De plus, le circuit 28 délivre un signal FS à la fréquence de saut, prélevé à la sortie du diviseur 283 et destiné à être utilisé pour la remise à zéro d'éléments de filtrage dans les démodulateurs 22, 23.

Les circuits 25 et 26 de synthèse de fréquences et de commande de séquence fournissent aux démodulateurs 22, 23 les fréquences nécessaires au décodage du signal reçu. Les circuits 25, 26 sont analogues au circuit correspondant 12 de l'émetteur. La figure 8 illustre l'un des circuits 25 et 26, par exemple le circuit 25.

Un diviseur de fréquence programmable 251 reçoit le signal de l'horloge 27 et divise la fréquence de celui-ci par un coefficient fourni par un circuit de logique combinatoire 252 en fonction du coefficient de saut CS' reçu de circuit 28. Contrairement au circuit logique 122 du synthétiseur de fréquences de l'émetteur, le circuit logique 252 ne reçoit pas de bit en plus du coefficient de saut. Le signal de sortie du diviseur 251 est transformé par un circuit de codage de sortie 253 en deux signaux SIN et COS mutuellement déphasés 90° pour attaquer le démodulateur 22 associé au circuit 25.

Comme on peut le voir sur la figure 9, le circuit de codage de sorties 253 comporte deux bascules 2531 et 2532 câblées en diviseur par des et branchées en série, chaque bascule étant actionnée sur le front descendant du signal reçu. En sortie Q de la bascule 2532, on dispose ainsi du signal COS dont la fréquence est égale au quart de celle du signal de sortie du diviseur 251. Une troisième bascule 2533 est actionnée sur le front montant de la sortie Q de la bascule 2531 et reçoit le signal COS sur son entrée de données D. La sortie Q de la bascule 2533 fournit le signal SIN, déphasé de 90° par rapport au signal COS et de même fréquence que celui-ci. Les états de sorties -Q des bascules 2531, 2532 et 2533 sont représentés sur les lignes (a), (b), (c) de la figure 9.

Conformément à une caractéristique de l'invention, les fréquences f1 à fN utilisées pour le codage des bits à transmettre sont réparties dans deux bandes distinctes : f1 à f(N/2) et f(N/2 + 1) à fN. Dans les deux combinaisons de fréquences codant les bits 0 et 1, les fréquences de même rang n sont choisies de manière à ne pas appartenir à la même bande ; de plus, lorsqu'une fréquence est utilisée en $n^{\text{ème}}$ position de la combinaison codant un bit 1, on évite d'utiliser cette même fréquence à la $(n-1)^{\text{ème}}$ ou $(n + 1)^{\text{ème}}$ position dans la combinaison codant un bit 0 (voir figure 2).

Les fréquences f'1 à f'N engendrées localement dans le récepteur ont des valeurs décalées d'une quantité sensiblement fixe fl par rapport aux valeurs des fréquences f1 à fN utilisées dans l'émetteur et, conformément à une autre caractéristique de l'invention, les démodulateurs 22 et 23 du récepteur sont affectés respectivement à la bande supérieure, fréquences f'1 à f'(N/2), et à la bande inférieure, fréquences f'(N/2 + 1) à f'N.

Aussi, le circuit de synthèse de fréquences 25, associé au démodulateur 22, est conçu pour engendrer une succession de N fréquences choisies parmi les N/2 fréquences de la bande supérieure f'1 à f'(N/2), la $n^{\text{ème}}$ fréquence de cette succession correspondant, au décalage fl près, à la $n^{\text{ème}}$ fréquence fn1 de la combinaison codant un bit 1 ou la $n^{\text{ème}}$ fréquence fn0 de la combinaison codant un bit 0 selon que fn1 ou fn0 est dans la bande supérieure (une seule des deux y étant nécessairement). De la même façon, le circuit 26 de synthèse de fréquences associé au démodulateur 23 engendre une succession de N fréquences choisies parmi les N/2 fréquences de la bande inférieure f'(N/2 + 1) à f'N, la $n^{\text{ème}}$ fréquence de cette succession correspondant, au décalage fl près, à la $n^{\text{ème}}$ fréquence fn1 de la combinaison codant un bit 1 ou à la $n^{\text{ème}}$ fréquence fn0 de la combinaison codant un bit 0 selon que fn1 ou fn0 est dans la bande inférieure.

A titre indicatif, si l'on se replace dans l'exemple envisagé plus haut d'un codage au moyen des huit fréquences f1 à f8 allant de 87,4 kHz à 40,3 kHz, et si l'on suppose que la fréquence de l'horloge 27 est égale à 18 MHz, les coefficients de division utilisés dans le diviseur programmable 251 du circuit 25 sont égaux à 55, 65, 75 et 85 et ceux utilisés dans le diviseur programmable correspondant du circuit 26 sont égaux à 96, 107, 118 et 129. Compte-tenu de la division par quatre effectuée par le circuit de codage de sortie produisant les signaux SIN et COS, les valeurs des fréquences engendrées localement dans le récepteur sont, pour la bande supérieure, f'1 = 81,8 kHz, f'2 = 69,2 kHz, f'3 = 60,0 kHz, f'4 = 52,9 k Hz et, pour la bande inférieure, f'5 = 46,9 kHz, f'6 = 42,1 kHz, f'7 = 38,1 kHz et f'8 = 34,9 kHz. La fréquence intermédiaire fl a donc une valeur sensiblement fixe, en moyenne égale à 5,54 kHz.

Les deux démodulateurs 22 et 23 étant semblables, on décrira maintenant seulement le démodulateur 22 en référence à la figure 10.

Un filtre passe-bande 221 est placé à l'entrée du démodulateur 22 et reçoit le signal provenant de la sortie de l'amplificateur 213 du circuit d'entrée 21. La fonction de ce filtre est d'atténuer toutes les fréquences ne se situant pas dans la bande affectée au démodulateur.

La sortie du filtre 221 est reliée en parallèle à deux voies de multiplication comprenant chacune un multiplieur analogique 222, 223 en série avec un filtre passe-bas 224, 225. Les multiplieurs 222, 223 reçoivent par ailleurs respectivement les signaux SIN et COS engendrés localement dans le circuit 25. Les sorties des filtres 224, 225 sont recombinées au moyen d'un additionneur 226, après avoir été mutuellement déphasées de 90° au moyen de déphaseurs 227a, 227b qui déphasent respectivement de +45° et -45° les sorties des filtres 224, 225.

La multiplication du signal reçu avec le signaux engendrés localement a pour objet d'effecter le changement de fréquence permettant de récupérer le signal à fréquence intermédiaire fl. L'utilisation d'un seul multiplieur conduirait à l'obtention de deux bandes latérales, l'une représentant le signal utile recherché et l'autre du bruit. C'est pourquoi deux voies de multiplication sont utilisées de façon connue en soi pour réaliser une détection en bande latérale unique, les voies recevant des signaux locaux en quadrature et un déphasage supplémentaire de 90° étant introduit entre les deux voies, à la fréquence intermédiaire, mais avant de sommer des fréquences mélangées.

La sortie de l'additionneur 226 attaque un filtre passe-bande 228 centré sur la fréquence intermédiaire fl. Le filtre de fréquence intermédiaire 228 est composé de plusieurs cellules du deuxième ordre branchées en cascade et sa sortie est appliquée à un détecteur de crête 229 dont le niveau de sortie représente l'énergie détectée à la fréquence du signal recherché.

Chaque cellule 2280 du filtre 228 (dont une seulement est représentée plus en détail sur la figure 9) est formée par un circuit de résonance parallèle 2281 de type LC excité par un générateur de courant 2282 commandé par la tension d'entrée appliquée à cette cellule. La mise en cascade de plusieurs (k) cellules ayant des caractéristiques différentes permet la réalisation d'un filtre d'un ordre 2k optimisé pour laisser passer la bande désirée et atténuer fortement les signaux hors bande.

Un interrupteur 2283 est connecté en parallèle avec le circuit résonant 2281 de chaque cellule 2280 pour permettre la remise à zéro de la sortie du filtre 228 au rythme du saut de fréquence (signal FS fourni par le circuit 28). De la sorte, à chaque nouvelle fréquence, l'ancien état de résonance est supprimé pour ne détecter que l'énergie reçue pendant la durée d'un saut de fréquence. Ainsi, la décision prise dans le circuit 24 de détermination de bit est, à chaque saut, indépendante des états précédents.

De la même façon, le circuit de détection de crête 229 est remis à zéro à chaque saut et l'entrée de commande d'échantillonnage du détecteur de crête 229 n'est activée qu'à partir du milieu environ d'une période de saut, en retardant le signal FS donnant le rythme du saut de fréquence. On évite ainsi de détecter le niveau de sortie des cicuits résonants du filtre 228 tout de suite après le redémarrage du filtrage, à un moment où les cellules du filtre présentent un bruit de départ non négligeable. La fenêtre d'analyse ainsi définie couvre la fin de chaque période pendant laquelle la réponse des cellules est représentative du signal reçu.

Du fait que les démodulateurs 22, 23 ne sont pas affectés à un état (0 ou 1) mais à une bande de fréquence, un traitement des signaux de sortie des démodulateurs est nécessaire pour retrouver la valeur du bit reçu. Ce traitement est réalisé par le circuit 24 de la figure 11.

Un comparateur 241 reçoit les signaux E1 et E2 disponibles en sortie des démodulateurs 22 et 23 et fournit un signal au niveau logique 1 ou 0 selon que l'énergie détectée par le démodulateur 22 est supérieure ou inférieure à celle détectée par le démodulateur 23.

Un circuit corrélateur logique 242 est prévu pour comparer les états successifs de la sortie du comparateur 241, au rythme du saut de fréquence (N fois la fréquence du réseau, soit 400 Hz dans l'exemple considéré avec un secteur à 50 Hz), avec les valeurs qu'ils devraient prendre lorsque le bit reçu est 1 (ou 0). Les résultats de ces comparaisons portant sur des fractions successives de bit sont totalisés dans un circuit de comptage 243 au cours de la durée de transmission d'un bit complet c'est-à-dire une période du secteur comme illustré par la figure 2. Le compteur est remis à zéro à chaque début d'un bit. L'état du compteur 243 est interprété par le circuit logique 244 à la fin de chaque bit, pour sortir sur un conducteur 245 l'état logique 1 si le résultat global est favorable à 1 (plus de quatre décisions sur huit favorables à 1) ou l'état logique 0 si le résultat global est favorable à 0 (moins de quatre décisions sur huit favorables à 1). Lorsque le résultat global n'est ni favorable à 1, ni favorable à 0 (quatre comparaisons sur huit en faveur de 1), ce cas est assimilé à du bruit et une deuxième sortie 246 est activée. On notera qu'il serait possible de coder chaque bit par une succession d'un nombre impair de fréquences pour aboutir dans tous les cas à une décision majoritaire. On peut par ailleurs élargir le nombre de possibilités de sorties devant être interprétées comme un bruit pour avoir une plus grande fiabilité sur les décisions prises sur la valeur des bits.

On a envisagé ci-avant une simple comparaison des énergies détectées par les démodulateurs. D'autres modes de détection peuvent être prévus, par exemple en pondérant la contribution de la détection pour chaque fraction de bit en fonction de l'amplitude de la différence entre les niveaux d'énergie détectés par les démodulateurs.

Dans la mesure où un circuit de codage 17 est utilisé à l'émission, la sortie du circuit logique 244 est reliée à un décodeur 247 dont la fonction est l'inverse de celle du circuit 17, c'est-à-dire la détection et, éventuellement, la correction des bits erronés.

L'ordre de déclenchement du système peut être envoyé d'un point central en moyenne tension (système de télécommande centralisée), ou du récepteur 20 situé sur la basse tension.

Dans le cas de l'utilisation d'une télécommande centralisée, le circuit 29 de réception de mot de déclenchement du récepteur 20 est semblable au circuit de réception de mot de déclenchement situé à l'émetteur.

Dans le cas de non-utilisation d'une télécommande centralisée, le circuit 29 constitue un émetteur de signal de déclenchement. Un mode de réalisation d'un tel circuit d'émission est illustré par la figure 12 ; il utilise un interrupteur et un circuit résonant qui fonctionnent en classe D.

Un diviseur de fréquence 291 fournit un train d'impulsions d'excitation à partir de l'horloge 27. Le coefficient de division est fixe et déterminé pour que la fréquence issue du diviseur tombe au centre de la bande passante du filtre de sortie du circuit 29.

Le diviseur 291 comporte une entrée supplémentaire de commande pour commander le fonctionnement ou l'arrêt du diviseur afin de produire en sortie une modulation par tout ou rien. Ainsi, les codes de modulation habituellement utilisés dans un système de télécommande centralisée peuvent être produits.

La sortie du diviseur 291 commande un interrupteur 292 branché en série avec un circuit résonant 293 entre la masse et une borne à une tension d'alimentation + V. Le circuit résonant 293 comprend un condensateur C3 en parallèle sur le primaire d'un transformateur T3. La sortie du circuit 29 est formée par le secondaire du transformateur T3 branché en série avec un condensateur C4 entre le conducteur de neutre N et le conducteur de phase P ; cette sortie est analogue à celle de l'injecteur 14 de l'émetteur. On notera à ce propos que le mode d'injection utilisé dans le circuit 29 décrit ci-dessus peut également être utilisé dans les circuits d'injection des émetteurs.

Le signal de déclenchement produit par le circuit 29 est détecté par le circuit 16 de l'émetteur. Le circuit de détection 16 peut être constitué par un relais télé-commandable tel que celui décrit dans le brevet des Etats-Unis d'Amérique No 4 361 766. Ce relais connu est destiné à commander toute opération désirée à l'issue d'un intervalle de temps programmable compté à partir de la réception d'un ordre sous forme de signaux superposés à la tension d'un réseau de distribution sur lequel le relais est branché.

**Revendications**

1. Procédé de transmission en bande étalée, pour transmettre, sur un canal de transmission, des informations se présentant sous forme de mots constitués d'éléments d'information pouvant prendre l'une parmi plusieurs valeurs, procédé selon lequel chaque élément d'information à transmettre est codé par une succession de plusieurs fréquences de codage différentes prédéterminées, selon lequel une série particulière de fréquences de codage est associée à chaque valeur d'élément d'information, la valeur de chaque élément d'information étant codée par l'ordre d'apparition des fréquences de codage dans la série correspondant à cette valeur, et selon lequel les différentes séries particulières de codage sont choisies de manière que les fréquences de même rang de ces séries se trouvent dans des bandes de fréquence différentes, caractérisé en ce que le canal de transmission comprend une ligne d'un réseau de distribution d'énergie électrique, et en ce que les fréquences de codage prédéterminées sont réparties pour parties égales dans deux bandes de fréquence distinctes espacées l'une de l'autre, et en ce que l'intervalle de temps pendant lequel est produite une fréquence pour coder un élément d'information ne succède pas ou ne précède pas l'intervalle de temps pendant lequel la même fréquence est utilisée pour coder un élément d'information d'une autre valeur.

2. Procédé suivant la revendication 1, caractérisé en ce que les fréquences de codage d'une série particulière sont émises pendant des intervalles de temps respectifs qui ne se recouvrent pas.

3. Système de transmission en bande étalée pour transmettre, selon le procédé de la revendication 1, sur un canal de transmission des information se présentant sous forme de mots constitués d'éléments d'information pouvant prendre l'une parmi plusieurs valeurs, ce système comprenant un émetteur (10) capable d'émettre des séries prédéterminées de fréquences de codage en fonction de la valeur des éléments d'information à transmettre, les séries correspondant à deux éléments d'information différents se distinguant par l'ordre d'apparition desdites fréquences de codage, caractérisé en ce que le canal de transmission comprend une ligne d'un réseau de distribution d'énergie électrique et en ce que ledit émetteur comporte un générateur de fréquences (12) unique, propre à produire de façon séquentielle les fréquences de codage de la série correspondant à la valeur de chaque élément d'information à transmettre, de telle manière que les fréquences de codage prédéterminées soient réparties pour parties égales dans deux bandes de fréquence distinctes espacées l'une de l'autre, et que l'intervalle de temps pendant lequel est produite une fréquence pour coder un élément d'information ne succède pas ou ne précède pas l'intervalle de temps pendant lequel la même fréquence est utilisée pour coder un élément d'information d'une autre valeur.

**Claims**

1. A method of wideband transmission for transmitting data over a transmission channel, the data being in the form of words made up of data elements each capable of taking up one of a plurality of values, in which method each data element to be transmitted is encoded by a succession of a plurality of different predetermined code frequencies, in which a particular series of code frequencies is associated with each data element, the value of each data element being encoded by the order in which the code frequencies appear in the series corresponding to said value, and in which the various particular code series are selected in such a manner that same-rank frequencies in these series lie in different frequency bands, characterized in that the transmission channel comprises an electricity power distribution line, and in that the predetermined code frequencies are distributed in equal portions over two distinct frequency bands that are spaced apart from each other, and in that the time interval during which any one frequency is produced to encode a data element does not follow or does not precede a time interval during which the same frequency is used to encode a data element of another value.

2. A method according to claim 1, characterized in that the code frequencies of a particular series are transmitted during respective non-overlapping time intervals.

3. A wideband transmission system for transmitting, according to the method of claim 1, over a transmission channel, the data being in the form of words made up of data elements each capable of taking up one of a plurality of values, the system comprising a transmitter (10) capable of transmitting predetermined series of code frequencies as a function of the value of the data elements to be transmitted, the series corresponding to two different data elements differing by the order in which said code frequencies appear, the system being characterized in that the transmission channel comprises an electricity power distribution line, and in that said transmitter includes a single frequency generator (12) suitable for producing in sequence the code frequencies of the series corresponding to the value of each data element to be transmitted, in such a manner that the predetermined code frequencies are distributed in equal portions over two distinct frequency bands that are spaced apart from each other, and that the time interval during which any one frequency is produced to encode a data element does not follow or does not precede a time interval during which the same frequency is used to encode a data element of another value.

## Patentansprüche

1. Verfahren zur Spreizbandübertragung für die Übertragung von Informationen auf einem Übertragungskanal, die in Form von Worten vorliegen, welche durch Informationselemente gebildet werden, die einen von mehreren Werten annehmen können, bei dem jedes zu übertragende Informationselement durch eine Abfolge mehrerer verschiedener vorherbestimmter Codierfrequenzen codiert wird und bei dem eine bestimmte Serie von Codierfrequenzen jedem Wert eines Informationselementes zugeordnet ist, wobei der Wert jedes Informationselementes durch die Reihenfolge des Auftretens der Codierfrequenzen in der diesem Wert entsprechenden Serie codiert wird, und bei dem diese verschiedenen bestimmten Codierserien derart gewählt sind, daß die Frequenzen der gleichen Position dieser Serien in verschiedenen Frequenzbändern liegen, dadurch gekennzeichnet, daß der Übertragungskanal eine Leitung eines Verteilernetzes für elektrische Energie umfaßt, daß die vorherbestimmten Codierfrequenzen in gleichen Abschnitten auf zwei unterschiedliche voneinander beabstandete Frequenzbänder aufgeteilt sind und daß das Zeitintervall, in dem eine Frequenz zum Codieren eines Informationselementes erzeugt wird, dem Zeitintervall, in dem die gleiche Frequenz dazu verwendet wird, um ein Informationselement eines anderen Wertes zu codieren, nicht nachfolgt oder nicht vorhergeht.

2. Verfahren nach Anspruch 1, dadurch gekennzeichnet, daß die Codierfrequenzen einer bestimmten Serie während entsprechender Zeitintervalle abgegeben werden, die sich nicht überschneiden.

3. Vorrichtung zur Spreizbandübertragung nach dem Verfahren gemäß Anspruch 1 auf einen Informationskanal für Informationen, die in Form von Worten vorliegen, welche durch Informationselemente gebildet werden, die einen von mehreren Werten annehmen können, die einen Sender (10) umfaßt, der vorherbestimmte Serien von Codierfrequenzen als Funktion des Wertes der zu übertragenden Informationselemente abgeben kann, wobei sich die zwei unterschiedlichen Informationselementen entsprechenden Serien durch die Reihenfolge des Auftretens dieser Codierfrequenzen voneinander unterscheiden, dadurch gekennzeichnet, daß der Übertragunsgkanal eine Leitung eines Verteilernetzes für elektrische Energie umfaßt und daß der Sender einen einzigen Frequenzgenerator (12) aufweist, der dazu geeignet ist, die Codierfrequenzen der dem Wert jedes zu übertragenden Informationselementes entsprechenden Serie sequentiell zu erzeugen, sodaß die vorherbestimmten Codierfrequenzen in gleichen Abschnitten auf zwei unterschiedliche voneinander beabstandete Frequenzbänder aufgeteilt sind und daß das Zeitintervall, in dem eine Frequenz zum Codieren eines Informationselementes erzeugt wird, dem Zeitintervall, in dem die gleiche Frequenz dazu verwendet wird, um ein Informationselement eines anderen Wertes zu codieren, nicht nachfolgt oder nicht vorhergeht.

Fig-1

Fig. 2

Fig. 3

Fig. 4

Fig. 5

(a)

(b)

(c)

(d)

(e)

(f)

Fig. 6

Fig.7

Fig.8

Fig. 9

Fig. 10

E1

241

COMPARATEUR

E2

CS'

CORRELATEUR

242

243

COMPTEUR

24

245

DECISION
SUR LE
BIT

247

DECODEUR
DE DONNEES

244

246

*Fig-11*

29

293

+V

$C_3$

MARCHE/ARRÊT

$T_3$   $\sim$

$C_3$

P

N

HORLOGE

DIVISEUR

27

291

292

*Fig-12*